# EUROPEAN PATENT APPLICATION

(11) **EP 2 372 303 A1**
(43) Date of publication of application: **05.10.2011**
(21) Application number: 09834814.7
(22) Date of filing: 21.12.2009
(51) Int. Cl.: G01C 21/00, G08B 21/18

(54) **IN-VEHICLE ELECTRONIC EQUIPMENT**

(30) Priority: 25.12.2008 JP 2008328983; 25.12.2008 JP 2008328982; 25.12.2008 JP 2008329797; 26.12.2008 JP 2008332395
(71) Applicant: Sanyo Electric Co., Ltd., Osaka 570-8677 (JP); Sanyo Consumer Electronics Co., Ltd., Tottori-shi Tottori 680-8634 (JP)
(72) Inventor: WATANABE Ryo, Tottori-shi Tottori 680-8634 (JP); KAJITANI Takashi, Tottori-shi Tottori 680-8634 (JP)
(74) Representative: Glawe, Delfs, Moll
(86) International application number: PCT/JP2009/071203
(87) International publication number: WO 2010/074013

(57) **Abstract**

A vehicle-mounted electronic device according to the present invention includes: an input portion through which a destination is specified; an incident-prone area storage portion in which incident-prone area data is stored; an alarm notification portion; and a control portion, in which an incidence of incidents in each area or an incidence of incidents in each facility in each area is stored in the incident-prone area storage portion, and, when an incidence of incidents in an area where the specified destination is located or an incidence of incidents in a facility that is the specified destination is equal to or greater than a predetermined value, the control portion makes the alarm notification portion provide an alarm notification.

## Description

### Technical Field

The present invention relates to a vehicle-mounted electronic device. More particularly, the present invention relates to a vehicle-mounted electronic device that issues, when a destination is located within an incident-prone area, a warning to give attention to a user based on incident-prone area data which is previously stored or incident-prone area data which is set by the user, the destination which is set and the like.

The term "incident" described in the present application refers to the theft of a vehicle itself, the theft of a vehicle-mounted accessory or a load in a vehicle (so-called vehicle break-in), a mischievous prank such as the scratching of a tire or coating, a natural disaster such as submergence caused by heavy rain or a landslide or any inconvenient event that is involved in a vehicle.

### Background Art

There have recently been provided various electronic devices such as a navigation device, a music player, a DVD player and a television set for analog broadcast and digital broadcast that are reduced in size and are portable or that are mounted in vehicles.

Some of these vehicle-mounted electronic devices are used by being attached to the dash board of a vehicle, as with, for example, a navigation device.

There has also recently been provided a vehicle-mounted and portable electronic device that includes an internal power supply and AC power supply connection means, that can be taken out of the vehicle and carried as a portable device and that can also be used domestically. Since this type of vehicle-mounted electronic device is relatively easily removed from a dash board, it is more likely to become a target of theft.

Various methods of coping with the theft of these vehicle-mounted electronic devices have been proposed.

For example, in patent document 1 (JP-A-2004-355241) below, there is disclosed an invention that relates to a vehicle-mounted communication ECU and a method of monitoring the theft thereof.

In the technology disclosed in patent document 1, the vehicle-mounted device communicates through a radio with an external device, the vehicle-mounted device is provided with a sensor that detects the state in which the vehicle-mounted device is installed in the vehicle and this sensor is used to monitor the abnormal removal thereof such as theft. Then, the sensor provides an output of the detection through the radio to notify a control center of the theft. At the same time, the radio is locked so that it cannot be used.

Moreover, in patent document 2 (Japanese Patent No. 3565125), there is disclosed an accident-prone section warning issuing device that issues a warning when an accident-prone section is located within a predetermined area to which the vehicle travels.

In the technology disclosed in patent document 2, both ends of a road section where accidents often occurred in the past and an intermediate point such as an intersection within the section are expressed as latitudes and longitudes, they are organized in each of accident-prone sections and are previously stored as accident-prone section information, whether or not at least two points among both ends of and the intermediate points of the accident-prone section are included in a predetermined area to which the vehicle travels is determined, and, when at least two points are determined to be included therein, a warning to notify access to the accident-prone section is issued.

### Related Art Document

### Patent Document

Patent document 1: JP-A-2004-355241 (paragraphs [0018]-[0020] and paragraphs [0029]-[0037])
Patent document 2: Japanese Patent No. 3565125 (paragraph [0012], paragraph [0014] and paragraphs [0016]-[0025])

### Disclosure of the Invention

### Problems to be Solved by the Invention

However, since, in the vehicle-mounted electronic device disclosed in patent document 1 above, the sensor for detecting the state in which the vehicle-mounted device is installed in the vehicle is provided, the abnormal removal thereof at the time of theft is detected by the sensor and the output of the detection is provided through the radio by communication to notify the external control center of the theft, it is necessary to provide an additional sensor separate from the main body of the vehicle-mounted electronic device so as to find out the theft of the vehicle-mounted electronic device, with the result that the cost thereof is disadvantageously increased. Moreover, since the vehicle-mounted electronic device needs to communicate with the external control center, it is disadvantageously impossible to find out the theft if, for example, a communication failure occurs.

In the accident-prone section warning issuing device disclosed in patent document 2 above, whether or not at least two points among both ends of and the intermediate points of the accident-prone section are included in the predetermined area to which the vehicle travels is determined, and, when at least two points are determined to be included therein, a warning to notify access to the accident-prone section is issued. However, with respect to theft, even if a theft-prone section is located within, the predetermined area to which the vehicle travels, it is not particularly problematic to drive through such a section. It is necessary to be most careful of theft when a driver stops and leaves the vehicle. Although, with respect to theft, a warning is required not while the vehicle is traveling but when the vehicle is stopped, since the accident-prone section warning issuing device disclosed in patent document 2 is not provided with means for determining whether or not the vehicle is stopped, it is disadvantageously impossible to issue an warning in a theft-prone area.

As a result of the inventors of the present application studying various things to overcome the above problems, they invented a vehicle-mounted electronic device that includes a present position detection feature for detecting the present position of the vehicle, data on theft-prone areas, an area identification feature for identifying the present position of the vehicle, a vehicle state detection feature for detecting the stop of the vehicle and a warning feature and that thereby can issue a warning about theft without need to particularly communicate with an external device when detecting that the vehicle is stopped in a theft-prone area. Then, the inventors filed the present application (Japanese Patent Application No. 2077-233500).

However, when actual scenes where the device is used are expected and various incidents other than theft are also expected, there are further several problems to be solved.

To overcome one of the problems, whether or not a warning is issued is not determined by making an alternative judgment that is determined previously and fixedly but is determined by comparing an incidence of incidents with a desired predetermined value, and it is preferable to meet various needs by changing the predetermined value depending on the situation.

Instead of issuing, after arrival at a destination, a warning to inform a driver that the destination is dangerous, it is preferable for a navigation device to issue such a warning when the destination is set.

It is further preferable to issue a warning about any incident other than theft and to change the details of the warning according to the type of incident and the situation of the incident.

It is further preferable not only to simply issue a warning but also to provide information as to what should be specifically done, whether or not there is another choice or the like.

Since, even in incidents of the same type in the same area, the probability of occurrence of the incidents and the degree of risk may vary according to external conditions such as the season, the time period of day and the weather, it is further preferable to use a warning corresponding to those conditions.

An object of the present invention is therefore to provide a practically effective vehicle-mounted electronic device.

### Means for Solving the Problem

To achieve the above object, according to the present invention, there is provided a vehicle-mounted electronic device including: an input portion through which a destination is specified; an incident-prone area storage portion in which incident-prone area data is stored; an alarm notification portion; and a control portion, in which an incidence of incidents in each area or an incidence of incidents in each facility in each area is stored in the incident-prone area storage portion, and, when an incidence of incidents in an area where the specified destination is located or an incidence of incidents in a facility that is the specified destination is equal to or greater than a predetermined value, the control portion makes the alarm notification portion provide an alarm notification (first configuration).

In this configuration, the predetermined value is changed according to the situation, and thus it is possible to freely adjust the range of alarm notification. When the destination is input, it is possible to provide the alarm notification.

In the vehicle-mounted electronic device of the first configuration according to the present invention and described above, when the incidence of incidents in the facility that is the specified destination is equal to or greater than the predetermined value, the control portion searches for, as an alternative destination, a facility which is located around the specified destination, in which an incidence of incidents is less than the predetermined value and which is of the same type (second configuration).

In this configuration, when there is a facility near the destination that is safer and is of the same type, it is possible to perform guiding to such a facility.

The vehicle-mounted electronic device of the second configuration according to the present invention and described above, when the alternative destination is found, the control portion makes the alarm notification portion perform guiding to the alternative destination or sets the alternative destination at a new destination whereas, when the alternative destination is not found, the control portion makes the alarm notification portion issue a warning to give attention (third configuration).

In this configuration, when the alternative destination is found, it is possible to perform guiding to the alternative destination or set the alternative destination at a destination whereas when the alternative destination is not found, it is possible to issue a warning saying that the specified destination is an incident-prone facility.

In the vehicle-mounted electronic device of the second configuration according to the present invention and described above, the control portion searches for, as the alternative destination, a facility that is the nearest to the specified destination (fourth configuration).

In this configuration, it is possible to perform guiding to the facility that is the nearest to the specified destination and that is of the same type.

in the vehicle-mounted electronic device of the first configuration according to the present invention and described above, the predetermined value can be changed through the input portion (fifth configuration).

In this configuration, it is possible to easily change the range of alarm notification of a warning according to the preference of the user and the situation, and, for example, when the alarm notification of an excessive warning is considered to be bothersome, it is possible to reduce the frequency of the alarm notification by increasing the predetermined value.

In the vehicle-mounted electronic device of the first configuration according to the present invention and described above, incidences of incidents in a plurality of time periods of day in each area are stored in the incident-prone area storage portion, the control portion calculates an estimated time or an estimated time period of day when the specified destination is reached and, when an incidence of incidents in the calculated time or the calculated time period of day in an area where the specified destination is located is equal to or greater than the predetermined value, the control portion makes the alarm notification portion issue a warning to give attention (sixth configuration).

In this configuration, the predetermined value is changed according to the situation, and thus it is possible to freely adjust the range of alarm notification.

In the vehicle-mounted electronic device of the first configuration according to the present invention and described above, incidences of incidents in a plurality of time periods of day in each facility in each area are stored in the incident-prone area storage portion, the control portion calculates an estimated time or an estimated time period of day when the specified destination is reached and, when an incidence of incidents in the calculated time or the calculated time period of day in the specified destination is equal to or greater than the predetermined value, the control portion searches for, as an alternative destination, a facility which is located around the specified destination, in which the incidence of incidents in the time or the time period of day is less than the predetermined value and which is of the same type (seventh configuration).

In this configuration, when there is a facility near the destination that is safer and is of the same type, it is possible to perform guiding to such a facility.

In the vehicle-mounted electronic device of the seventh configuration according to the present invention and described above, when the appropriate alternative destination is found, the control portion makes the alarm notification portion perform guiding to the alternative destination whereas, when the appropriate alternative destination is not found, the control portion makes the alarm notification portion issue a warning to give attention (eighth configuration).

In this configuration, when the alternative destination is found, it is possible to perform guiding to the alternative destination whereas when the alternative destination is not found, it is possible to issue a warning saying that the specified destination is an incident-prone facility.

In the vehicle-mounted electronic device of the seventh configuration according to the present invention and described above, the control portion searches for, as the alternative destination, a facility that is the nearest to the specified destination (ninth configuration).

In this configuration, it is possible to perform guiding to the facility that is the nearest to the specified destination and that is of the same type.

In the vehicle-mounted electronic device of the sixth or seventh configuration according to the present invention and described above, the predetermined value can be changed through the input portion (tenth configuration).

In this configuration, it is possible to easily change the range of alarm notification of a warning according to the preference of the user and the situation, and, for example, when the alarm notification of an excessive warning is considered to be bothersome, it is possible to reduce the frequency of the alarm notification by increasing the predetermined value.

In the vehicle-mounted electronic device of the first configuration according to the present invention and described above, the type of incident in each area and an incidence of incidents in the type of incident and warning statements corresponding to a plurality of types of incident are stored in the incident-prone area storage portion, and, when an incidence of incidents in an area where the specified destination is located is equal to or greater than the predetermined value, the control portion selects a warning statement corresponding to the type of incident in the area, and makes the alarm notification portion issue a warning to give attention (eleventh configuration).

In this configuration, it is possible to issue a warning corresponding to the type of incident, and the predetermined value is changed according to the situation and thus it is possible to freely adjust the range of alarm notification.

In the vehicle-mounted electronic device of the first configuration according to the present invention and described above, the type of incident in each facility in each area and an incidence of incidents in the type of incident and warning statements corresponding to a plurality of types of incident are stored in the incident-prone area storage portion, and, when an incidence of incidents in a facility that is the specified destination is equal to or greater than the predetermined value, the control portion selects a warning statement corresponding to a type of incident in the area, and makes the alarm notification portion issue a warning to give attention (twelfth configuration).

In this configuration, it is possible to issue a warning corresponding to the type of incident in the specified facility, and the predetermined value is changed according to the situation and thus it is possible to freely adjust the range of alarm notification.

In the vehicle-mounted electronic device of the eleventh or twelfth configuration according to the present invention and described above, the types of incident include at least theft of a vehicle and theft of a vehicle-mounted electronic device, and a warning statement for each of the theft of a vehicle and the theft of a vehicle-mounted electronic device is stored in the incident-prone area storage portion (thirteenth configuration).

In this configuration, it is possible to encourage the user to act according to the types of theft, namely the theft of a vehicle and the theft of a vehicle-mounted electronic device (vehicle break-in).

In the vehicle-mounted electronic device of the twelfth configuration according to the present invention and described above, when the incidence of incidents in the facility that is the specified destination is equal to or greater than the predetermined value, the control portion searches for, as an alternative destination, a facility which is located around the specified destination, in which an incidence of incidents is less than the predetermined value and which is of the same type (fourteenth configuration).

In this configuration, when there is a facility near the destination that is safer and is of the same type, it is possible to perform guiding to such a facility.

In the vehicle-mounted electronic device of the fourteenth configuration according to the present invention and described above, when the appropriate alternative destination is found, the control portion makes the alarm notification portion perform guiding to the alternative destination whereas, when the appropriate alternative destination is not found, the control portion makes the alarm notification portion issue a warning to give attention (fifteenth configuration).

In this configuration, when there is a facility near the destination that is safer and is of the same type, it is possible to perform guiding to such a facility. When there is no such a facility, it is possible to encourage the user to act according to the types of theft, for example, namely the thoft of a vehicle and the theft of a vehicle-mounted electronic device (vehicle break-in).

In the vehicle-mounted electronic device of the eleventh or twelfth configuration according to the present invention and described above, the predetermined value can be changed through the input portion (sixteenth configuration).

In this configuration, it is possible to easily change the range of alarm notification of a warning according to the preference of the user and the situation, and, for example, when the alarm notification of an excessive warning is considered to be bothersome, it is possible to reduce the frequency of the alarm notification by increasing the predetermined value.

In the vehicle-mounted electronic device of the first configuration according to the present invention and described above, types of incident including at least theft of a vehicle and theft of a vehicle-mounted electronic device in each area and incidences of incidents in the types of incident and warning statements corresponding to the types of incident are stored in the incident-prone area storage portion, and, when an incidence of incidents in an area where the specified destination is located is equal to or greater than the predetermined value, if the type of incident is the theft of a vehicle, the control portion searches for an area which is around an area where the specified destination is located and in which an incidence of incidents in the type of incident is less than the predetermined value any makes the alarm notification portion perform guiding to the area in which the incidence of incidents is less than the predetermined value whereas, if the type of incident is the theft of a vehicle-mounted electronic device, the control portion selects a warning statement corresponding to the type of incident and makes the alarm notification portion issue the selected warning statement (seventeenth configuration).

In this configuration, when the type of incident is the theft of a vehicle, it is possible to perform guiding to the alternative area and guide the user there whereas when the type of incident is the theft of a vehicle-mounted electronic device, it is possible to issue a warning according to the theft to give attention to the user. The predetermined value is changed according to the situation, and thus it is possible to freely adjust the range of alarm notification.

In the vehicle-mounted electronic device of the first configuration according to the present invention and described above, types of incident including at least theft of a vehicle and theft of a vehicle-mounted electronic device in each facility in each area and incidences of incidents in the types of incident and warning statements corresponding to the types of incident are stored in the incident-prone area storage portion, and, when an incidence of incidents in a facility that is the specified destination is equal to or greater than the predetermined value, if the type of incident is the theft of a vehicle, the control portion searches for, as an alternative destination, a facility which is located around the facility that is the specified destination, in which an incidence of incidents in the type of incident is less than the predetermined value and which is of a same type and makes the alarm notification portion perform guiding to the facility in which the incidence of incidents is less than the predetermined value and which is of the same type whereas, if the type of incident is the theft of a vehicle-mounted electronic device, the control portion selects a warning statement corresponding to the type of incident and makes the alarm notification portion issue the selected warning statement (eighteenth configuration).

In this configuration, when the type of incident is the theft of a vehicle, it is possible to perform guiding to the alternative area and guide the user there whereas when the type of incident is the theft of a vehicle-mounted electronic device, it is possible to issue a warning according to the theft to give attention to the user. The predetermined value is changed according to the situation, and thus it is possible to freely adjust the range of alarm notification.

In the vehicle-mounted electronic device of the eighteenth configuration according to the present invention and described above, when the appropriate alternative destination is found by the searching, the control portion makes the alarm notification portion perform guiding to the alternative destination whereas, when the appropriate alternative destination is not found, the control portion selects a warning statement corresponding to the type of incident and makes the alarm notification portion issue the selected warning statement (nineteenth configuration).

In this configuration, when an alternative destination is found, it is possible to perform guiding to the alternative destination whereas when an alternative destination is not found, it is possible to issue an appropriate warning indicating that the specified destination is a vehicle-theft-prone facility, for example, a warning saying "Vehicles are often stolen. Please be careful of it." Hence, it is possible to encourage the user to take an appropriate action.

In the vehicle-mounted electronic device of the eighteenth configuration according to the present invention and described above, the control portion searches for, as the alternative destination, a facility that is the nearest to the specified destination (twentieth configuration).

In this configuration, it is possible to perform guiding to the facility that is the nearest to the specified destination and that is of the same type.

In the vehicle-mounted electronic device of the eighteenth configuration according to the present invention and described above, the control portion displays a list of the facilities of the same type on a display portion, and sets at a destination a facility that is selected by the input portion from the facilities of the same type displayed on the display portion (twenty-first configuration)

In this configuration, the user is made to check a destination obtained by changing, the destination is changed, a new route is shown, and thus it is possible to guide the user to a facility of the same type as the specified destination.

In the vehicle-mounted electronic device of the seventeenth or eighteenth configuration according to the present invention and described above, when the type of incident is the theft of a vehicle-mounted electronic device, the control portion selects a warning statement corresponding to the type of incident and makes the alarm notification portion issue the selected warning statement when a vehicle reaches the destination (twenty-second configuration).

In this configuration, when the vehicle reaches the destination, it is possible to issue an appropriate warning, for example, "Things are often stolen from the interior of vehicles. Please do not leave variables in the vehicle." Hence, it is possible to encourage the user to take an appropriate action.

In the vehicle-mounted electronic device of the seventeenth or eighteenth configuration according to the present invention and described above, the predetermined value can be changed through the input portion (twenty-third configuration).

In this configuration, it is possible to easily change the range of alarm notification of a warning according to the preference of the user and the situation, and, for example, when the alarm notification of an excessive warning is considered to be bothersome, it is possible to reduce the frequency of the alarm notification by increasing the predetermined value.

### Advantages of the Invention

According to the vehicle-mounted electronic device of the present invention, a predetermined value is changed according to the situation, and thus it is possible to freely adjust the range of alarm notification and provide an alarm notification when the destination is input, with the result that it is highly praticallyeffective.

### Brief Description of Drawings

[Fig. 1] A block diagram showing the configuration of main portions of a navigation device according to the present invention;
[Fig. 2] A diagram showing a theft-prone area on a map;
[Fig. 3] A diagram showing theft-prone area data;
[Fig. 4A] A diagram showing an example where data on theft-prone areas is stored for each unit of administration;
[Fig. 4B] A diagram showing an example where data indicating whether an incidence of theft at each time period of day in a facility is high or low is stored.
[Fig. 4C] A diagram showing an example of appropriate warning statements corresponding to the types of incident;
[Fig. 5] A flowchart showing the control operation of a control portion 10 of a navigation device according to a first embodiment of the present invention;
[Fig. 6A] A flowchart showing the control operation of the control portion 10 of a navigation device according to a second embodiment of the present invention;
[Fig. 6B] A flowchart showing another example of the control operation of the control portion 10 of the navigation device according to the second embodiment of the present invention;
[Fig. 7A] A flowchart showing the control operation of the control portion 10 of a navigation device according to a third embodiment of the present invention;
[Fig. 7B] A flowchart showing a variation of the control operation of the control portion 10 of the navigation device according to the third embodiment of the present invention;
[Fig. 8A] A flowchart showing the control operation of the control portion 10 of a navigation device according to a fourth embodiment of the present invention;
[Fig. 8B] A flowchart showing another example of the control operation of the control portion 10 of the navigation device according to the fourth embodiment of the present invention.

### Best Mode for Carrying Out the Invention

Embodiments of the present invention will be specifically described in detail below with reference to the accompanying drawings. The embodiments below deal with examples of a vehicle-mounted navigation device according to the technical ideas of the present invention; the embodiments are not intended to limit the present invention to this vehicle-mounted navigation device. The present invention can be equally applied to vehicle-mounted electronic devices and the like that do not have the navigation feature of the vehicle-mounted navigation devices according to the embodiments and to devices according to other embodiments included in the scope of claims.

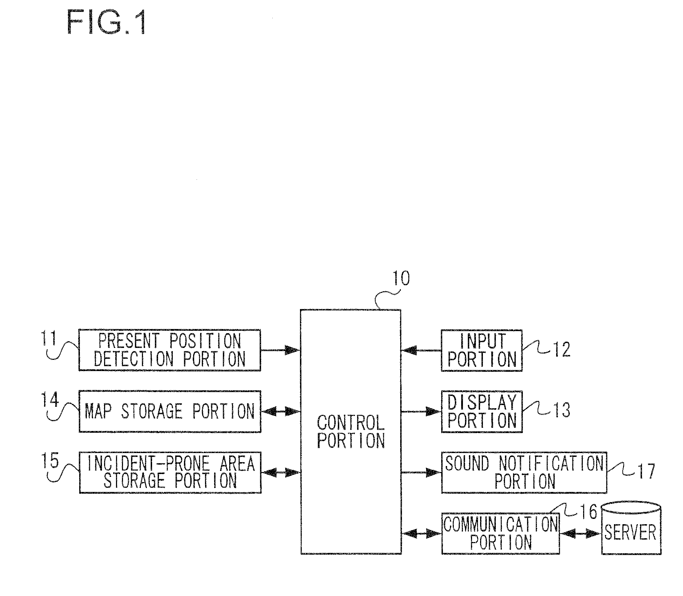

Fig. 1 is a block diagram showing the configuration of main portions of a vehicle-mounted navigation device according to the present invention.

A control portion 10 is formed with a processor composed of a CPU (not shown) and a RAM and a ROM (not shown); the control portion 10 controls the operations of the portions of the vehicle-mounted navigation device according to control programs recorded in the RAM and the ROM.

A present position detection portion 11 is formed with a GPS receiver and the like that receive radio waves including time period of day information from a plurality of GPS satellites orbiting around the Earth.

The present position detection portion 11 can also use a self-navigation portion composed of a distance sensor, a direction sensor, a steering angle sensor and the like.

An input portion 12 is formed with various keys and switches and the like through which to perform the input of an operation in the vehicle-mounted navigation device and the input of a departure place and a destination.

A display portion 13 displays a map image and a guiding route image such that a user can visually recognize them; the display portion 13 is formed with a liquid crystal display and the like.

The display portion 13 may have a touch sensor such that the display portion 13 functions as the input portion; in this case, the user touches an icon displayed on a screen to perform a selection input.

A map storage portion 14 stores: data on a plurality of rectangular meshes (mesh data) that are obtained by division with predetermined latitudes and longitudes; and road data including road node data in which node points such as the intersections and the branch points of a road are set at nodes and road link data in which routes connecting nodes are set at links. The road node data includes road node numbers, position coordinates, the number of connection links and the names of intersections, and further includes guiding points corresponding to guiding sites such as an intersection and guiding data for guiding the user to, for example, turn right, turn left or go straight.

The road link data includes the road node number that serves as a start point and an end point, the type of road, the length of a link (link cost), a necessary time period, the number of lanes, the width of a road and the like. Data on bridges, tunnels, railroad crossings, tollgates and the like is added, as the attributes of links, to the road link data. The type of road refers to information including the difference between expressways and toll roads and the difference between national roads, prefectural roads and the like.

The map storage portion 14 further stores background data including: water system data such as coast lines, lakes and marshes and the shapes of rivers; administrative boundary data; and facility data including the position, shape and name of facilities.

An incident-prone area storage portion 15 previously stores data on areas where various incidents often occur and thus risk is involved in the stop and parking of vehicles in those areas; those areas include an area where vehicles and vehicle-mounted navigation devices are often stolen, an area where mischievous pranks of scratching tires and the coating of vehicles are often encountered and an area where submergence is likely to be caused by a typhoon or heavy rain.

A communication portion 16 can connect to, for example, a server in a nearby police headquarters to obtain the latest incident-prone area information; the communication portion 16 is used to update the incident-prone area storage portion 15. The user himself can also input the incident-prone area information through the input portion 12.

A sound alarm notification portion 17 performs various types of sound alarm notification in the vehicle-mounted navigation device, such as guiding alarm notification and the like in route guiding; the sound alarm notification portion 17 is formed with a speaker and the like.

Incident-prone area data will now be described using theft-prone area data as an example.

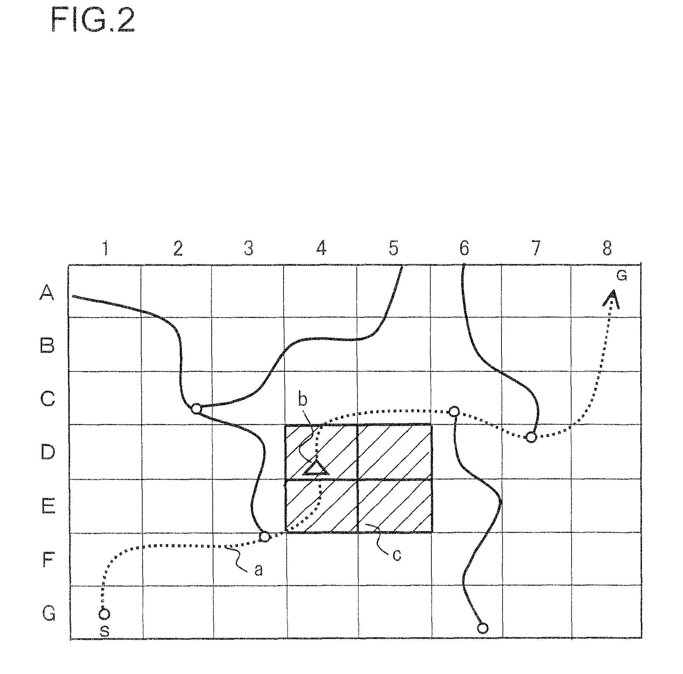

Fig. 2 is a diagram showing a theft-prone area on map data stored in the map storage portion 14.

In Fig. 2, (a) represents a guiding route, (b) represents the present position of the vehicle and (c) represents the theft-prone areas.

As shown in Fig. 2, the map data stored in the map storage portion 14 is composed of data on a plurality of rectangular meshes (mesh data) that are obtained by dividing the entire map with predetermined latitudes and longitudes; data on each of the divided meshes includes the road node data, the road link data and the like.

In the present embodiment, data on meshes can be identified with letters of the alphabet and numbers; the theft-prone areas shown in Fig. 2 are mesh data (D4), (D5), (E4) and (E5) enclosed by thick lines.

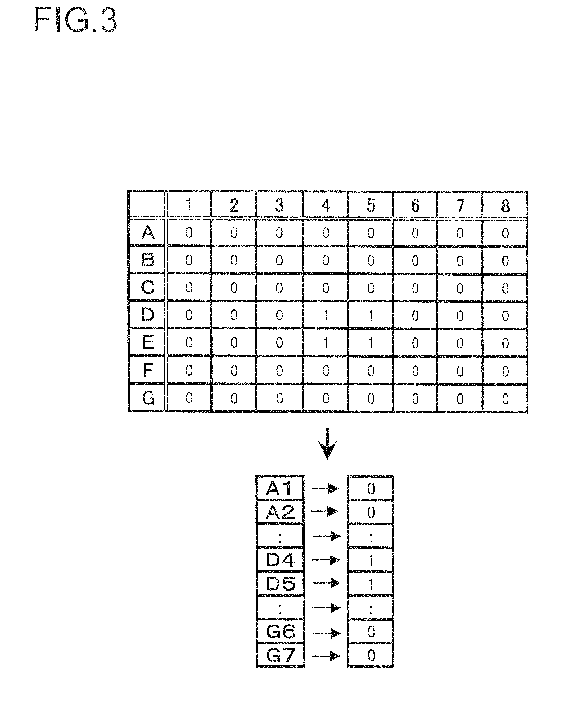

The theft-prone area data stored in the incident-prone area storage portion 15 will now be described with reference to Fig. 3.

In the theft-prone area data, whether or not an area on each piece of mesh data stored in the map storage portion 14 is a theft-prone area is previously set; it is stored in the incident-prone area storage portion 15. As shown in Fig. 3, whether or not each of the areas on all pieces of mesh data stored in the map storage portion 14 is a theft-prone area is set; as described above, each piece of mesh data is identified with a letter of the alphabet and a number.

In Fig. 3, mesh data that is a theft-prone area is set at (1), and specifically, (D4), (D5), (E4) and (E5) are set at (1); mesh data that is not a theft-prone area is set at (0). Since this type of setting is made, a warning is issued when it is detected that the vehicle is stopped on the road data or facility data included in the mesh data which is set at (1) indicating the theft-prone area.

Although the above embodiment deals with a case where, with respect to the data on the theft-prone areas, whether or not an area on each piece of mesh data is a theft-prone area is set, instead of performing the setting of the theft-prone areas for each piece of mesh data, it is also possible to perform setting for each unit of administration.

Furthermore, it is also possible to perform setting for each of facilities such as hotels, restaurants, various types of play facilities and department stores, or to perform setting for each of buildings in an urban area. In a large facility, there may be a plurality of parking lots; in this case, setting may be performed for each of the parking lots within the facility.

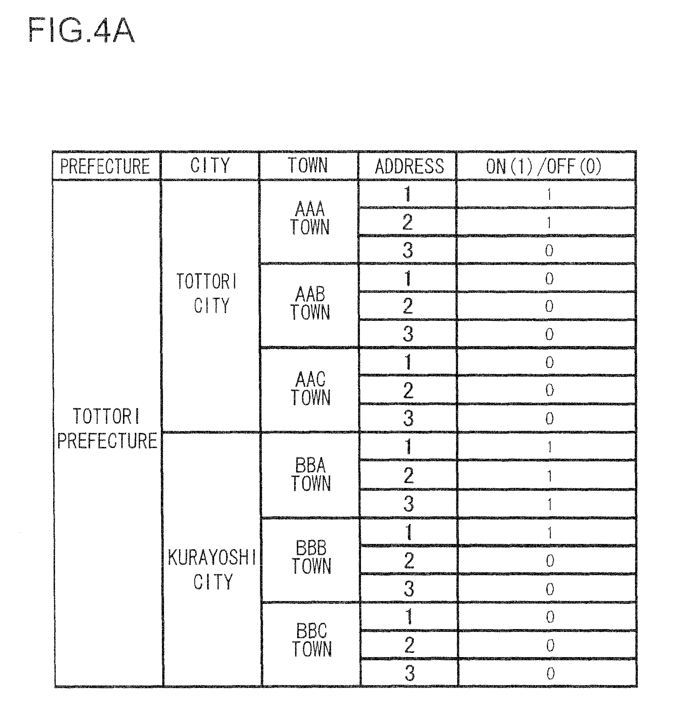

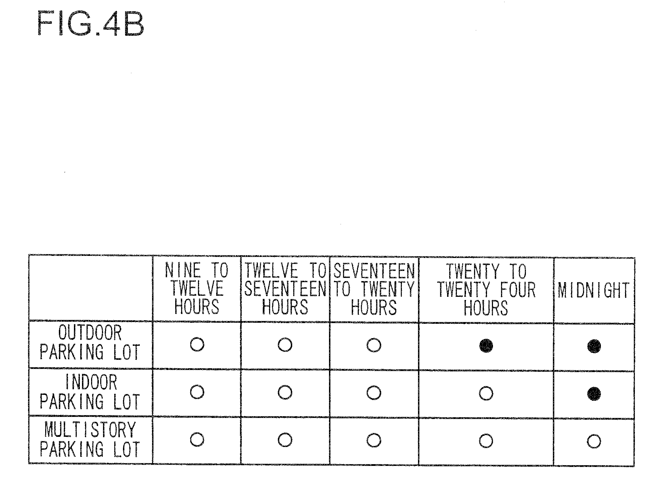

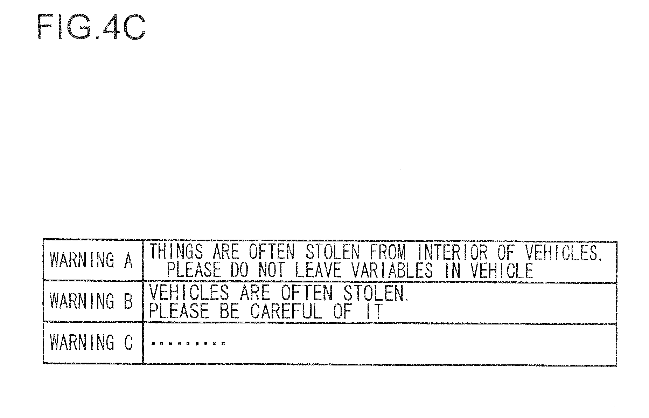

Figs. 4A, 4B and 4C are diagrams showing an example of data stored in the incident-prone area storage portion 15 and data on warning statements.

Fig. 4A is a diagram showing that, when Tottori Prefecture is taken as an example, data on theft-prone areas is stored for each unit of administration. In this data, detailed division into prefectures, cities, towns and addresses is performed, and whether or not an area in each address is a theft-prone area is set. In the figure, 1 AAA town, Tottori city, and 2 AAA town, Tottori city, are set at (1) indicating the theft-prone area. Moreover, 1 BBA town, Kurashiki city, 2 BBA town, Kurashiki city, 3 BBA town, Kurashiki city, and 1 BBB town, Kurashiki city are set at (1) indicating the thoft-prono area. Since the other areas are not theft-prone areas, they are set at (0)

Although, in the present embodiment, whether or not an area in each address is a theft-prone area is set, the present invention is not limited to this. The setting of theft-prone areas may be performed for each city or each town.

Although, in the above embodiment, each piece of mesh data is set at (0) or (1), the value of an incidence of theft (any value that indicates how large the risk of occurrence of incidents is, such as the frequency of occurrence of theft resulting from the average number of times of occurrence of thoft in, for example, one week, one month or one year or the relative incidence obtained by normalizing such a frequency, is referred herein to as an incidence) is set, and, when the set incidence exceeds a predetermined value, the area is set at a theft-prone area whereas when it is less than the predetermined value, the area is set at an area other than the theft-prone areas. The predetermined value is previously set by the manufacturer of the vehicle-mounted navigation device in part of the incident-prone area storage portion 15 or in part of the ROM where programs are stored; the predetermined value may be changed as appropriate by the user through input portion 12.

Moreover, an incidence in each month of one year or in each season or an incidence in each time period of day or both are set, and the setting value corresponding to the month, the season and the time period of day when the vehicle-mounted navigation device is used may be used.

Fig. 4B shows an example thereof, that is, data indicating whether an incidence of theft at each time period of day in each of three packing lots having different structures is high or low. Although, in the figure, a white circle represents a relatively low incidence, and a black circle represents a relatively high incidence, it is preferable to practically set the value of an incidence as described above. For example, when the incidence exceeds a predetermined value, the incidence is assumed to be relatively high (black circle in the figure) whereas when the incidence is less than the predetermined value, the incidence is assumed to be relatively low (white circle in the figure).

Since there are various types of incidents involved in vehicles, an appropriate warning is preferably issued according to the type of incident. Fig. 4C is an example of data on warning statements; various types of warning statements are associated with waning statement numbers A, B, C, ... and are stored in the incident-prone area storage portion 15. In this case, the value of an incidence of theft is preferably stored in each of storage potions of Fig. 4B along with the waning statement number corresponding to the type of theft.

### First embodiment

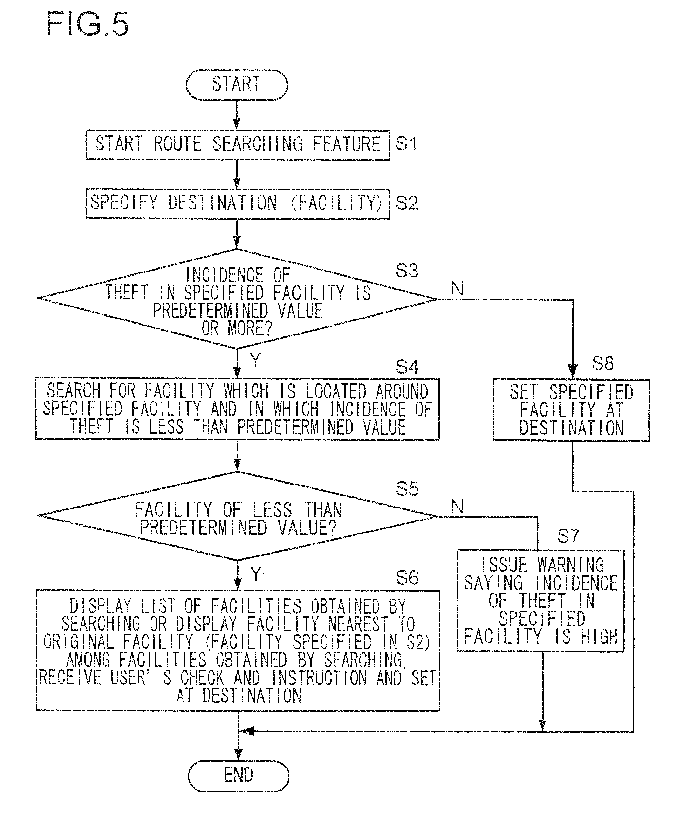

The control operation of the control portion 10 of the vehicle-mounted navigation device according to the present invention will now be described with reference to the flowchart of Fig. 5.

With reference to the flowchart, an example of a case where theft-prone area data on the vehicle and the vehicle-mounted navigation device is used will be described.

With reference to the flowchart, a description will be given based not on an example where an incidence of theft in each of areas is stored but on an example where an incidence of theft in each of facilities in each of areas is stored.

The route search feature of the vehicle-mounted navigation device is started (step S1). The destination (usually a facility such as a house, a store or a building) is specified through the input portion 12 (step S2). Then, theft-prone area data stored in the incident-prone area storage portion 15 is compared with the destination specified in step S2, and thus whether or not an incidence of theft in the destination is equal to or greater than a predetermined value is determined (step S3).

The above predetermined value is previously set by the manufacturer of the vehicle-mounted navigation device in part of the incident-prone area storage portion 15 or in part of the ROM where programs are stored; the predetermined value may be changed as appropriate by the user through input portion 12.

When, in the processing in step S3, the incidence of theft in the destination is determined to be equal to or greater than the predetermined value (yes in step S3), facilities of the same type near the destination in which an incidence of theft is less than the predetermined value is searched for (step S4). If there is a facility that satisfies such a condition (yes in step S5), it is displayed on the display portion 13 (step S6). If there are a plurality of facilities that satisfy such a condition, they are displayed in a list and the user is made to conduct a selection, or the facility closest to the destination specified in step S2 is displayed and the user is made to check it, and the destination is reset.

If there is no facility that satisfies such a condition (no in step S5), a display is produced which says that the specified destination is a facility where the incidence of theft is high. For example, a waning saying "This facility is a theft-prone facility. Please specify another facility." or a warning saying "This facility is a theft-prone facility. Please remove the vehicle-mounted navigation device when leaving the vehicle." is displayed on the display portion 13. Alternatively, such a warning is sounded by the sound alarm notification portion 17 (step S7).

In this embodiment, the warning about the theft of the vehicle and the warning about the theft of the vehicle-mounted navigation device are described. Naturally, when the warning about the theft of the vehicle is issued, data on vehicle-theft-prone area is used whereas when the warning about the theft of the vehicle-mounted navigation device is issued, data on the theft of the vehicle-mounted navigation device is used.

### Second embodiment

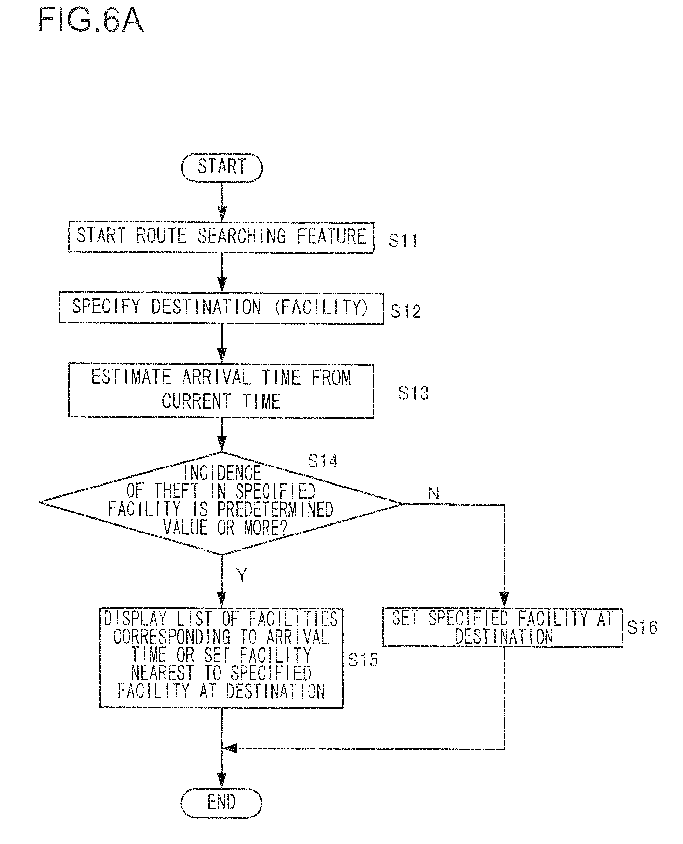

Although, in the first embodiment, the incidence of theft in the destination is constant regardless of time periods of day, for example, the incidence of theft in the daytime may be different from that in the night time. In the second embodiment, an example of a case where incidence data at each time period of day as shown in Fig. 4B is stored in the incident-prone area storage portion 15 will be described with reference to the flowchart of Fig. 6A.

The details of steps S11 and S12 in Fig. 6A are the same as those of steps S1 and S2 in Fig. 5. The current time is acquired, and an arrival time is estimated by adding to the current time a necessary time period of the route obtained by searching through the route search feature (step S13). If an incidence of theft in a destination facility specified with respect to the arrival time (or a time period of day corresponding to a few hours after the arrival time) based on data of Fig. 4B is equal to or greater than a predetermined value (yes in step S14), neighboring facilities which are the same type of facilities as the previously specified destination and in which an incidence of theft at the animal time (or a time period of day corresponding to a few hours after the arrival time) is low are displayed in a list, and the user is made to select a desired facility from them, or the facility, among them, nearest to the previously specified facility is displayed as an alternative destination, and the user is made to check it, with the result that it is set at a new destination (step S15). When an alternative destination cannot be searched for, a display saying that the incidence of theft in the specified facility is high is produced on the display portion 13.

For example, when the destination is a relatively large facility such as a large shopping center or an amusement park, it has a plurality of parking lots where the incidence of theft at each time period of day may be different as shown in Fig. 4B. In this case, if the previously specified destination is an outdoor parking lot, and the estimated arrival time of the destination is after, for example, nineteen thirty, a warning saying that theft may occur after twenty is issued, an indoor parking lot and a multistory parking lot are displayed as an alternative destination, and the user is made to select either of them or either of the indoor parking lot and the multistory parking lot that is the nearest to the previously specified outdoor parking lot is displayed as an alternative destination, and the user is made to change and check it, with the result that the destination is reset and the process proceeds to the route searching.

If the incidence of theft in the specified destination is less than a predetermined value (no in step S 14), such a destination is set and the process proceeds to the route searching (step S16).

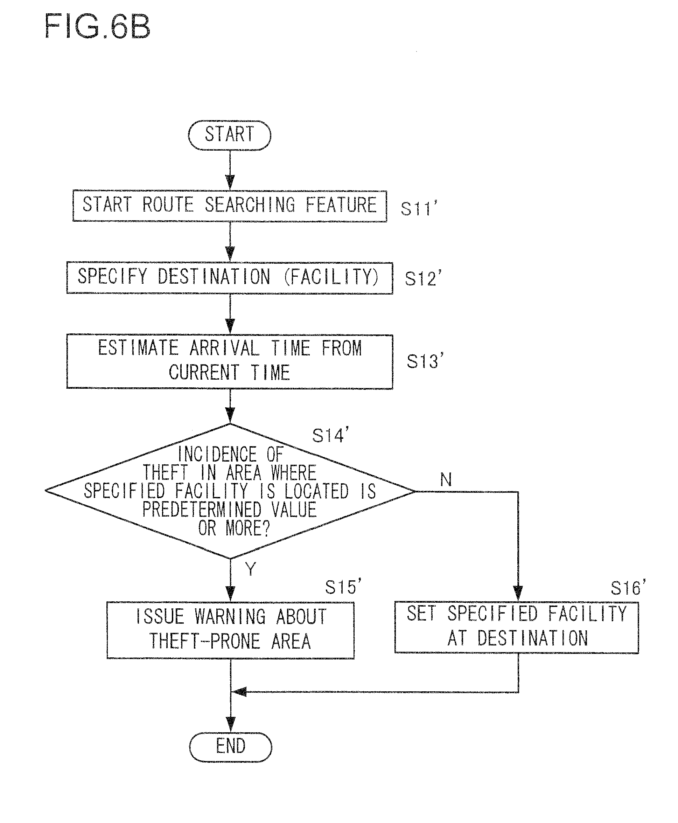

A variation of the processing of Fig. 6A will be described with reference to the flowchart of Fig. 6B. Here, it is assumed that incidence data at a plurality of time periods of day in each area is stored in the incident-prone area storage portion 15.

The details of steps S11' to S13' are the same as those shown in Fig. 6A. If, in step S 14', an incidence of theft in an area at a destination facility specified with respect to the arrival time (or a time period of day corresponding to a few hours after the arrival time) based on data stored in the incident-prone area storage portion 15 is equal to or greater than a predetermined value (yes in step S14'), a display saying that the incidence of theft in an area where the destination facility is located is high is produced on the display portion 13 (step S15').

If the incidence of theft in the area where the specified destination is located is less than a predetermined value (no in step S14'), such a destination is set and the process proceeds to the route searching (step S16').

### Third embodiment

There are various types of incidents involved in vehicles; a warning can be considered according to each type of incident. For example, in the case of theft, there are theft of a vehicle itself and theft of an accessory such as a vehicle-mounted navigation device or a load in a vehicle (so-called vehicle break-in); a warning is preferably issued according to each type of theft.

For theft of a vehicle, for example, a warning saying "Vehicles are often stolen. Please be careful of it."can be issued; for a vehicle break-in, for example, a warning saying "Things are often stolen from the interior of vehicle. Please do not leave variables in the vehicle." can be issued.

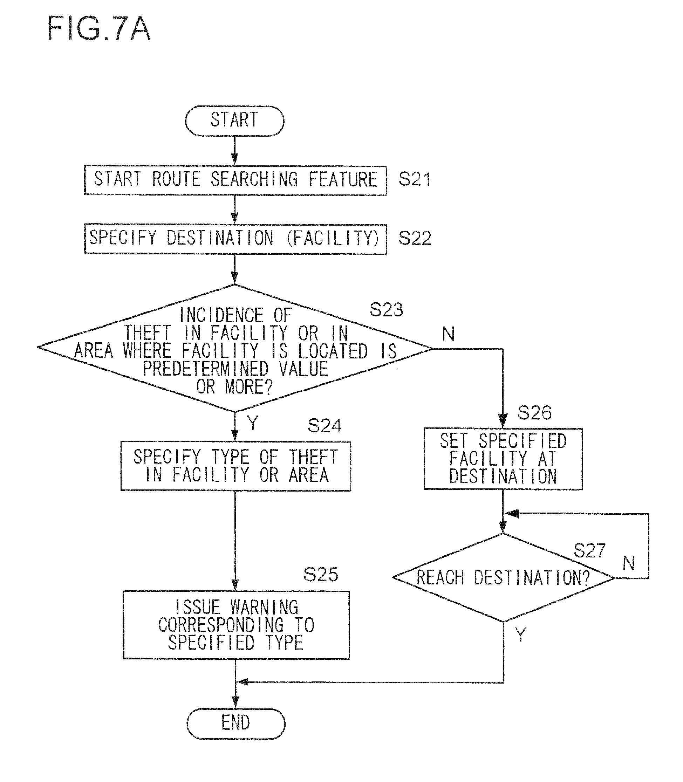

Fig. 7A is a flowchart of the present embodiment. Types of theft (that is, warning statement numbers) in each facility in each area, an incidence of theft in each of the types of theft and a warning statement (Fig. 4C) corresponding to each of the types of theft are stored in the incident-prone area storage portion 15. Alternatively, types of theft (that is, warning statement numbers) in each area, an incidence of theft in each of the types of theft and a warning statement (Fig. 4C) corresponding to each of the types of theft are stored therein.

The details of steps S21 and S22 are the same as those of steps Sal and S2 in Fig. 5. If an incidence of theft in the specified destination facility or in an area where the destination facility is located is equal to or greater than a predetermined value (yes in step S23), a waning statement number corresponding to the type of the theft in the destination facility or the area where the destination facility is located is identified (step S24), and a warning statement corresponding to the number is taken out of the database of Fig. 4C and is displayed on the display portion 13 or is sounded as a warning by the sound alarm notification portion 17 (step S25).

For a mischievous prank such as the scratching of a tire or coating, for example, a warning saying "Mischievous pranks such as the scratching of a tire or coating are often conducted. Please be careful of it" can be issues. For an area that is subject to submergence caused by heavy rain or a typhoon, for example, a warning saying "The area is subject to submergence caused by heavy rain. Please be careful of it" is preferably issued. Likewise, this can be applied to various types of disasters in areas such as an area where things are likely to be dropped by strong wind and to hit a person and an area that is considered to suffer a landslide at the time of earthquake.

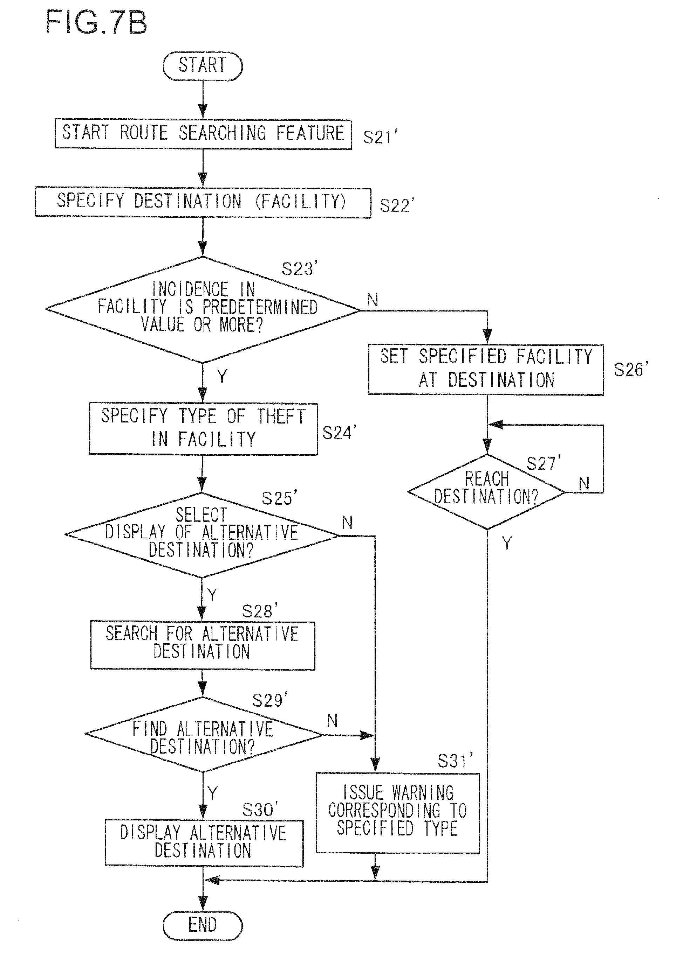

Fig. 7B is a flowchart showing a variation of the processing of Fig. 7A. If, in processing in step S23', an incidence of theft in the destination facility is determined to be equal to or greater than a predetermined value (yes in step S23'), after step S24', in step S25', a display for prompting the user to determine whether or not an alternative destination is displayed is produced on the display portion 13.

If the displays of the alternative destination is selected (yes in step S25'), a facility, among facilities of the same type near the destination, in which an incidence of theft is less than a predetermined value is searched for (step S28'). If such a facility is present (yes in step S29'), it is displayed on the display portion 13 (step S30'). If a plurality of such facilities are present, they are displayed in a list, and the user is made to make a selection, or the facility that is the nearest to the destination specified in step S22' is displayed, and the user is made to check it, with the result that it is reset at the destination.

If the failure to display the alternative destination is selected (no in step S25'), or if searching is performed but no such a facility is present (no in step S29'), a warning statement corresponding to the waning statement number specified in step S24' is taken out of the database of Fig. 4C and is displayed on the display portion 13 or is sounded as a warning by the sound alarm notification portion 17 (step S31').

### Fourth embodiment

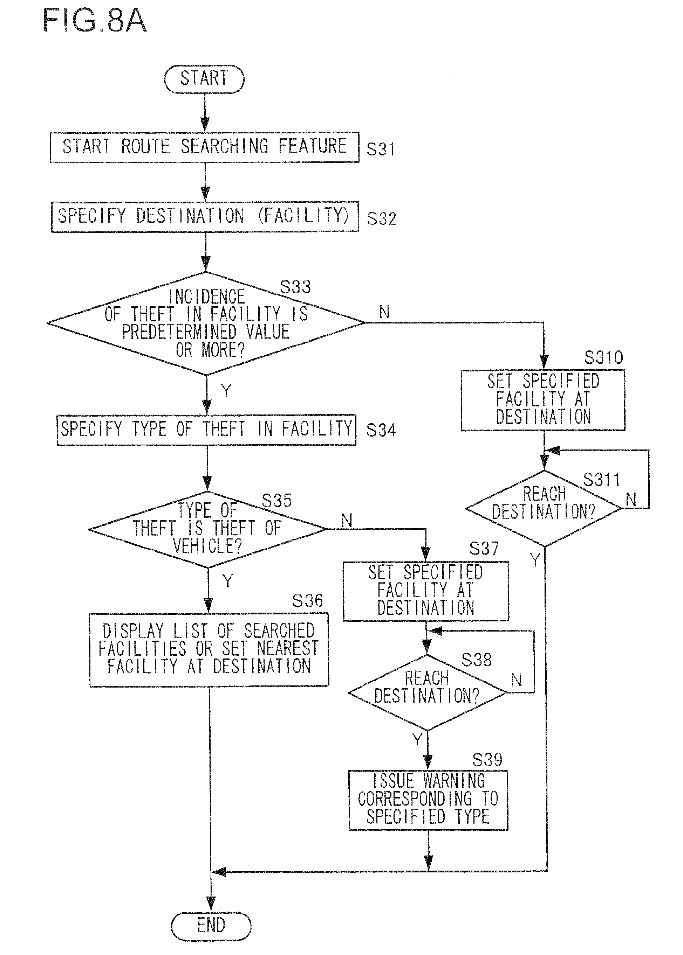

Fig. 8A is a variation of the embodiment of Fig. 7A. The details of steps S31 to S34, 5310 and S311 are the same as those of steps S21 to S24 and S26 and S27 in Fig. 7A. If the type of theft is the theft of a vehicle itself (yes in step S35), a facility of the same type near the specified destination in which an incidence of theft of a vehicle itself is less than a predetermined value is searched for, and neighboring facilities that have been searched for are displayed in a list, and the user is made to make a selection, or the facility, among the neighboring facilities that have been searched for, which is the nearest to the original facility (facility specified in step S32) is presented, and the user is made to check it, with the result that it is reset at the destination (step S36) and route searching to the new destination is performed. If an alternative facility cannot be searched for, a warning statement corresponding to the waning statement number specified in step S34 is taken out of the database of Fig. 4C and is displayed on the display portion 13 or is sounded as a warning by the sound alarm notification portion 17.

On the other hand, if the type of theft is a vehicle break-in (no in step S35), the specified facility is set at the destination, and route searching is performed (step S37), route guiding is started and waiting is performed until arrival at the destination (a loop in step S38) and a predetermined warning is issued to the user at the time of arrival (step S39).

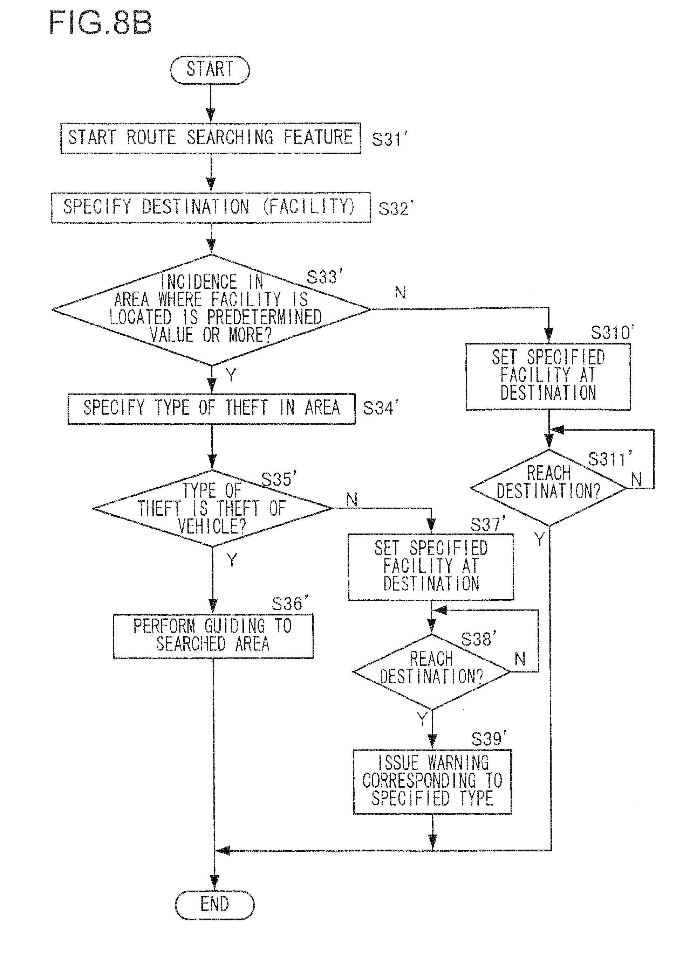

Fig. 8B is another variation of the embodiment of Fig. 7. The details of steps S31' to S34', S310' and S311' are the same as those of steps S21 to S24 and S26 and S27 in Fig. 7. If the type of theft is the theft of a vehicle itself (yes in step S35'), an area, among areas around the area of the specified destination, in which an incidence of theft of a vehicle itself is less than a predetermined value is searched for, and the area obtained by the searching is guided by the display portion 13 (step S36').

Since, as described in detail above, the vehicle-mounted electronic device of the present invention determines, by comparing an incidence of incidents with a predetermined value, whether or not an warning is issued, the predetermined value is changed, and thus it is possible to change the range and the frequency of the alarm notification.

As described previously, the present invention is not limited to the vehicle-mounted navigation device described in the embodiments; the present invention can be applied to other electronic devices that have data on incident-prone areas, means for input of a destination and the feature of issuing a warning.

### Industrial Applicability

The present invention can be applied to various vehicle-mounted electronic devices such as a vehicle-mounted navigation device.

### List of Reference Symbols

- 10: Control portion
- 11: Present position detection portion
- 12: Input portion
- 13: Display portion
- 14: Map storage portion
- 15: Incident-prone area storage portion
- 16: Communication portion
- 17: Sound alarm, notification portion

## Claims

1. A vehicle-mounted electronic device comprising:
an input portion through which a destination is specified;
an incident-prone area storage portion in which incident-prone area data is stored;
an alarm notification portion; and
a control portion,
wherein an incidence of incidents in each area or an incidence of incidents in each facility in each area is stored in the incident-prone area storage portion, and, when an incidence of incidents in an area where the specified destination is located or an incidence of incidents in a facility that is the specified destination is equal to or greater than a predetermined value, the control portion makes the alarm notification portion provide an alarm notification.

2. The vehicle-mounted electronic device of claim 1,
wherein, when the incidence of incidents in the facility that is the specified destination is equal to or greater than the predetermined value, the control portion searches for, as an alternative destination, a facility which is located around the specified destination, in which an incidence of incidents is less than the predetermined value and which is of a same type.

3. The vehicle-mounted electronic device of claim 2,
wherein, when the alternative destination is found, the control portion makes the alarm notification portion perform guiding to the alternative destination or sets the alternative destination at a new destination whereas, when the alternative destination is not found, the control portion makes the alarm notification portion issue a warning to give attention.

4. The vehicle-mounted electronic device of claim 2,
wherein the control portion searches for, as the alternative destination, a facility that is the nearest to the specified destination.

5. The vehicle-mounted electronic device of claim 1,
wherein the predetermined value can be changed through the input portion.

6. The vehicle-mounted electronic device of claim 1,
wherein incidences of incidents in a plurality of time periods of day in each area are stored in the incident-prone area storage portion, the control portion calculates an estimated time or an estimated time period of day when the specified destination is reached and, when an incidence of incidents in the calculated time or the calculated time period of day in an area where the specified destination is located is equal to or greater than the predetermined value, the control portion makes the alarm notification portion issue a warning to give attention.

7. The vehicle-mounted electronic device of claim 1,
wherein incidences of incidents in a plurality of time periods of day in each facility in each area are stored in the incident-prone area storage portion, the control portion calculates an estimated time or an estimated time period of day when the specified destination is reached and, when an incidence of incidents in the calculated time or the calculated time period of day in the specified destination is equal to or greater than the predetermined value, the control portion searches for, as an alternative destination, a facility which is located around the specified destination, in which the incidence of incidents in the time or the time period of day is less than the predetermined value and which is of a same type.

8. The vehicle-mounted electronic device of claim 7,
wherein, when the appropriate alternative destination is found, the control portion makes the alarm notification portion perform guiding to the alternative destination whereas, when the appropriate alternative destination is not found, the control portion makes the alarm notification portion issue a warning to give attention.

9. The vehicle-mounted electronic device of claim 7,
wherein the control portion searches for, as the alternative destination, a facility that is the nearest to the specified destination.

10. The vehicle-mounted electronic device of claim 6 or 7,
wherein the predetermined value can be changed through the input portion.

11. The vehicle-mounted electronic device of claim 1,
wherein a type of incident in each area and an incidence of incidents in the type of incident and warning statements corresponding to a plurality of types of incident are stored in the incident-prone area storage portion, and, when an incidence of incidents in an area where the specified destination is located is equal to or greater than the predetermined value, the control portion selects a warning statement corresponding to a type of incident in the area, and makes the alarm notification portion issue a warning to give attention.

12. The vehicle-mounted electronic device of claim 1,
wherein a type of incident in each facility in each area and an incidence of incidents in the type of incident and warning statements corresponding to a plurality of types of incident are stored in the incident-prone area storage portion, and, when an incidence of incidents in a facility that is the specified destination is equal to or greater than the predetermined value, the control portion selects a warning statement corresponding to a type of incident in the area, and makes the alarm notification portion issue a warning to give attention.

13. The vehicle-mounted electronic device of claim 11 or 12,
wherein the types of incident include at least theft of a vehicle and theft of a vehicle-mounted electronic device, and a warning statement for each of the theft of a vehicle and the theft of a vehicle-mounted electronic device is stored in the incident-prone area storage portion.

14. The vehicle-mounted electronic device of claim 12,
wherein, when the incidence of incidents in the facility that is the specified destination is equal to or greater than the predetermined value, the control portion searches for, as an alternative destination, a facility which is located around the specified destination, in which the incidence of incidents is less than the predetermined value and which is of a same type.

15. The vehicle-mounted electronic device of claim 14,
wherein, when the appropriate alternative destination is found, the control portion makes the alarm notification portion perform guiding to the alternative destination whereas, when the appropriate alternative destination is not found, the control portion makes the alarm notification portion issue a warning to give attention.

16. The vehicle-mounted electronic device of claim 11 or 12,
wherein the predetermined value can be changed through the input portion.

17. The vehicle-mounted electronic device of claim 1,
wherein types of incident including at least theft of a vehicle and theft of a vehicle-mounted electronic device in each area and incidences of incidents in the types of incident and warning statements corresponding to the types of incident are stored in the incident-prone area storage portion, and
when an incidence of incidents in an area where the specified destination is located is equal to or greater than the predetermined value, if the type of incident is the theft of a vehicle, the control portion searches for an area which is around an area where the specified destination is located and in which an incidence of incidents in the type of incident is less than the predetermined value and makes the alarm notification portion perform guiding to the area in which the incidence of incidents is less than the predetermined value whereas, if the type of incident is the theft of a vehicle-mounted electronic device, the control portion selects a warning statement corresponding to the type of incident and makes the alarm notification portion issue the selected warning statement.

18. The vehicle-mounted electronic device of claim 1,
wherein types of incident including at least theft of a vehicle and theft of a vehicle-mounted electronic device in each facility in each area and incidences of incidents in the types of incident and warning statements corresponding to the types of incident are stored in the incident-prone area storage portion, and,
when an incidence of incidents in a facility that is the specified destination is equal to or greater than the predetermined value, if the type of incident is the theft of a vehicle, the control portion searches for, as an alternative destination, a facility which is located around the facility that is the specified destination, in which an incidence of incidents in the type of incident is less than the predetermined value and which is of a same type and makes the alarm notification portion perform guiding to the facility in which the incidence of incidents is less than the predetermined value and which is of the same type whereas, if the type of incident is the then of a vehicle-mounted electronic device, the control portion selects a warning statement corresponding to the type of incident and makes the alarm notification portion issue the selected warning statement.

19. The vehicle-mounted electronic device of claim 18,
wherein, when the appropriate alternative destination is found by the searching, the control portion makes the alarm notification portion perform guiding to the alternative destination whereas, when the appropriate alternative destination is not found, the control portion selects a warning statement corresponding to the type of incident and makes the alarm notification portion issue the selected warning statement.

20. The vehicle-mounted electronic device of claim 18,
wherein the control portion searches for, as the alternative destination, a facility that is the nearest to the specified destination.

21. The vehicle-mounted electronic device of claim 18,
wherein the control portion displays a list of the facilities of the same type on a display portion, and sets at a destination a facility that is selected by the input portion from the facilities of the same type displayed on the display portion.

22. The vehicle-mounted electronic device of claim 17 or 18,
wherein, when the type of incident is the theft of a vehicle-mounted electronic device, the control portion selects a warning statement corresponding to the type of incident and makes the alarm notification portion issue the selected warning statement when a vehicle reaches the destination.

23. The vehicle-mounted electronic device of claim 17 or 18,
wherein the predetermined value can be changed through the input portion.
